# EUROPÄISCHE PATENTSCHRIFT

(11) **EP 1 328 867 B1**
(45) Veröffentlichungstag und Bekanntmachung des Hinweises auf die Patenterteilung: **06.04.2005**
(21) Anmeldenummer: 01987917.0
(22) Anmeldetag: 15.10.2001
(51) Int. Cl.: G06F 11/14

(54) **VORRICHTUNG UND VERFAHREN ZUR DATENSPIEGELUNG**
DEVICE AND METHOD FOR DATA MIRRORING
DISPOSITIF ET PROCEDE DE MIROITAGE DE DONNEES

(30) Priorität: 17.10.2000 DE 10053016
(43) Veröffentlichungstag der Anmeldung: 23.07.2003
(73) Patentinhaber: Libelle Informatik Gmbh, 70565 Stuttgart (DE)
(72) Erfinder: KRÜGER, Hans-Joachim, 71134 Eidlingen (DE); HODAPP, Georg, 73249 Wernau (DE); ZIPF, Jürgen, 75015 Bretten (DE)
(74) Vertreter: Hengelhaupt, Jürgen, Dipl.-Ing.
(86) Internationale Anmeldenummer: PCT/EP2001/011882
(87) Internationale Veröffentlichungsnummer: WO 2002/033550

(56) Entgegenhaltungen:
- EP-A- 0 672 985
- EP-A- 0 838 758
- US-A- 5 546 536
- US-A- 5 819 020

## Beschreibung

Die Erfindung betrifft eine Vorrichtung und ein Verfahren zur Datenspiegelung, welche insbesondere zur schnellen verlustlosen Datensicherung und -rekonstruktion nutzbar sind.

In der Informations- und Computertechnologie ist es von größter Wichtigkeit, die teilweise sehr umfangreichen und komplexen Datenmengen vor Verlust und Beschädigung zu schützen. Dazu bedient man sich konventionellerweise verschiedener Sicherungs- und Backup-Verfahren, welche darin bestehen, daß in zeitlichen Abständen eine Kopie des vorhandenen Datenbestandes angelegt und in einem unabhängigen System archiviert wird. Diese Kopie wird im Falle der Korruption des Original-Datenbestandes genutzt, um die Funktionsfähigkeit der Systeme aufrechtzuerhalten, die auf die Daten zugreifen. Der Nachteil aller dieser Sicherungsverfahren liegt darin, daß im Falle von Bedienfehlern, Hardware-Ausfällen, Vandalismus, Brand oder anderen Katastrophen die Änderungen, die nach der letzten Sicherungskopie am Datenbestand vorgenommen wurden, nicht rekonstruiert werden können und somit verloren sind.

Bei Lösungen, die Datenbanken synchron spiegeln, ist man zwar bei Hardware-Ausfällen gegen Datenverlust geschützt. Der aktuelle, letzte Datenbestand bleibt erhalten, jedoch versagt dieses Verfahren bei logischen Fehlern, wie bspw. dem versehentlichen Löschen der Daten. Außerdem lassen diese Verfahren die folgenden Probleme ungelöst: automatische Anpassung der Spiegel-Computersysteme an Änderungen der Datenbankstruktur sowie automatische Fehlererkennung und Umschaltung auf das Spiegel-Computersystem. Ein weiterer Nachteil der bekannten Lösungen besteht darin, daß die Programme per Scipt installiert und gesteuert werden. Diese Scripte müssen - meist mit erheblichem Aufwand - an die Umgebung der vorhandenen Systeme angepaßt werden. Diese Vorgehensweise birgt viele Fehlerquellen in sich. Erfolgt die Datenspiegelung durch die herkömmlichen Verfahren online, so ergeben sich bei größeren zu übertragenden Datenmengen Nachteile durch die erforderlichen Übertragungszeiten, und die Datensicherheit wird beeinträchtigt infolge fehlender Verschlüsselung.

In der Europäischen Patentanmeldung EP 0 838 758 A2 werden ein Verfahren und eine Vorrichtung zur Durchführung einer retroaktiven Datensicherung in Computersystemen beschrieben. Der retroaktive Back-up-Mechanismus benutzt dabei eine Back-up-Strategie, gemäß welcher eine Datensicherung nach vorgegebenen Zeiten und für vorgegebene Sicherungslevel, die vom Nutzer vorgegeben werden, durchgeführt wird. Kriterien für diese Nutzervorgaben können dabei sein: die Zeitdauer seit der letzten Datensicherung oder die Menge der in einer bestimmten Zeit übertragbaren Daten, d. h. der Zeitpunkt für die Ausführung des Backup richtet sich nach der seit der letzten Datensicherung verflossenen Zeit oder alternativ nach der zu sichernden Datenmenge. Es werden bei einer Datensicherung dann nur Files oder Daten kopiert, welche nach dem vorgegebenen Zeitpunkt nicht geändert oder gelöscht wurden. Bei diesem Verfahren gehen aber bei einem Hardwareausfall die Daten verloren, welche seit dem letzten Backup geändert wurden.

Die US-Patentschrift US 5,546,536 "Log for Selective Management of Specific Address in a Shadow Storage System" beschreibt ein Verfahren und eine Vorrichtung für ein Datenmanagement von in einer Vielzahl von Speichereinrichtungen ("shadow set") redundant abgelegten Daten eines Computersystems. Ein besonderes Merkmal dieser Lösung besteht darin, daß in einem "write history log" Angaben über die Adresse des Speicherorts, an dem Daten von einer Datenquelle abgelegt wurden, und Angaben zur Identifikation der Datenquelle(n), welche die Daten geliefert haben, abgespeichert werden. Ein "write history log" enthält Einträge ("write history entries"), die vom Controller eines Gerätes des "shadow set" in Reaktion auf einen Schreib-Befehl von seiten eines Host eingetragen werden. Sie dienen dazu, im Fehlerfall aus den einzelnen, redundant auf mehreren Spiegelsystemen verteilten Daten schnell den vollständigen von einem Host abgespeicherten Datenbestand zu rekonstruieren, indem mit Hilfe der im "write history log" enthaltenen Informationen über Datenquelle und Speicher-Adresse die betroffenen Speicherbereiche ermittelt und nur die erforderlichen Datenmengen zur "Verschmelzung" herangezogen werden. Die im "write history log" enthaltenen Daten erlauben es nicht, den Datenbestand der Spiegelsysteme an den letzten fehlerfreien Zustand der Hosts heranzuführen. Ausfälle beim Host, die sich auf noch nicht in die Spiegelsysteme übertragene Daten erstrecken, können nicht wiederhergestellt werden.

Ein anderes System zur Datenwiederherstellung bei Schadensfällen wird in der Europäischen Patentanmeldung EP 0 672 985 A1 "Asynchronous Remote Data Duplexing" vorgestellt. Ein besonderes Merkmal dieser Lösung besteht darin, dass die Sicherungsdatensätze mit einer Menge von Attributen (wie beispielsweise Zeitstempeln, Speicherreihenfolge oder -adresse) versehen werden. So gekennzeichnete Datensätze werden geeignet zusammengefasst und an einen zweiten Speicherplatz übertragen, wo sie konsistent abgespeichert werden, d. h. in der gleichen Reihenfolge wie im ersten Speicher (sequential consistency). Durch die konsistente Speicherung am zweiten Speicherplatz wird erreicht, dass bei asynchroner Datensicherung eine korrekte Wiederherstellung der (duplizierten) Daten erreicht wird. Dieses Verfahren weist jedoch die oben (Seite 1) beschriebenen prinzipiellen Nachteile einer asynchronen Datensicherung auf.

Die US-Patentschrift US 5,819,020 offenbart ein Real-Time-Datensicherungssystem. Dabei wird eine nutzerdefinierte Anforderung zur Änderung von Datensätzen an einen ersten Server gesendet, welcher diese Anforderung an einen zweiten Server weiterleitet, wobei die Anforderung anschließend auf beiden Servern abgearbeitet wird, so daß die Festplatten von erstem und zweitem Server zu jeder Zeit aktuelle Kopien der selben Files aufweisen. Gegen logische Fehler schützt das in US 5,819,020 vorgestellte Verfahren jedoch nicht.

Der Erfindung liegt deshalb die Aufgabe zugrunde, eine Vorrichtung und ein Verfahren zur Datenspiegelung zu schaffen, welche die oben genannten Nachteile beheben und speziell eine verlustfreie Rekonstruktion des letzten fehlerfreien Zustandes des ursprünglichen auf dem Echt-Computersystem befindlichen Originaldatenbestandes gewährleisten, sich durch schnelles Umschalten auf ein Spiegel-Computersystem auszeichnen und durch Unabhängigkeit vom Standort der einzelnen Computersysteme einen hohen Schutz vor Brand, Hochwasser, Blitzschlag, Vandalismus und anderen Katastrophen bietet. Darüber hinaus soll das zu schaffende Verfahren die Übertragungszeiten verkürzen und die Sicherheit der Daten durch komprimierte und verschlüsselte Datenübertragung erhöhen, Strukturänderungen in der Original-Datenbank automatisch nachvollziehen und automatisch auftretende Fehler erkennen, analysieren und in Abhängigkeit davon automatisch Maßnahmen zur Beseitigung der Fehler ergreifen.
Diese Aufgabe wird erfindungsgemäß gelöst durch die Merkmale im kennzeichnenden Teil der Ansprüche 1, 2, 11 und 12 im Zusammenwirken mit den Merkmalen im Oberbegriff. Zweckmäßige Ausgestaltungen der Erfindung sind in den Unteransprüchen enthalten.

Ein besonderer Vorteil der Erfindung liegt darin, daß eine verlustfreie Datensicherung durch Rekonstruktion des letzten fehlerfreien Zustandes eines ursprünglichen, auf einem Echt-Computersystem befindlichen Originaldatenbestandes erreicht wird, indem eine Vorrichtung zur Datenspiegelung mindestens zwei Computersysteme mit Speichereinrichtungen umfaßt, wobei die Computersysteme durch Mittel zur Datenübertragung 1 miteinander verbunden sind, und die Vorrichtung derart eingerichtet ist, daß ein Verfahren zur Datenspiegelung gemäß Anspruch 11 durchführbar ist, indem eine Kopie der Datenmenge eines ersten Echt-Computersystems 2 in einem Speicherbereich, dem Endspeicher 5, von mindestens einem zweiten, vom Echt-Computersystem 2 unabhängigen Spiegel-Computersystem 4 abgelegt wird und anschließend alle Informationen über Änderungen des Echt-Computersystems 2 an das/die Spiegel-Computersystem(e) 4 übertragen, dort zwischengespeichert und, gesteuert durch ein Computerprogramm, nach einer einstellbaren zeitlichen Verzögerung dem Endspeicher 5 zugeführt werden, wenn der durch das Computerprogramm überwachte Zustand der Computersysteme nicht von einem definierten Zustand abweicht, und andernfalls mit Hilfe des Computerprogramms aus den im Endspeicher 5 des Spiegel-Computersystems 4 vorhandenen Daten zusammen mit der Veränderungsdatenmenge ein durch vorgebbare Parameter definierter Zustand des Echt-Computersystems 2 rekonstruiert wird, indem durch Verarbeitung der im Zwischenspeicher 6 des Spiegel-Computersystems 4 abgelegten Veränderungsdatenmenge die fehlerfreien Zustandsänderungen des Echt-Computersystems 2 auf dem Spiegel-Computersystem 4 nachvollzogen werden.

Eine spezielle Ausführungsform sieht dabei vor, daß die Vorrichtung zur Datenspiegelung aus mindestens zwei Computersystemen mit Speichereinrichtungen und einem durch einen Timer steuerbaren Programm besteht, wobei die Computersysteme durch Mittel zur Datenübertragung 1 miteinander verbunden sind, und wovon ein erstes Computersystem, das Echt-Computersystem 2, den aktuellen Originaldatenbestand im Echtdatenspeicher 3 enthält, und ein zweites Computersystem, das Spiegel-Computersystem 4, eine ältere Version dieses Originaldatenbestands in einem auf dem Spiegel-Computersystem 4 befindlichen Enddatenspeicher 5, und die Veränderungsdatenmenge, welcher alle Informationen über die auf dem Echt-Computersystem 2 ausgeführten Aktionen enthält, die auf dem Echt-Computersystem 2 von der älteren Version zum aktuellen Zustand des Originaldatenbestandes geführt haben, in einem auf den Speichermedien des Spiegel-Computersystems 4 befindlichen Zwischendatenspeicher 6 abgelegt ist, und das Programm dazu dient, die gesamte Vorrichtung und das Verfahren zu überwachen sowie die automatische Ersetzung des Echt-Computersystems 2 durch das Spiegel-Computersystem 4 anhand vorgebbarer Kriterien zu steuern.

Unter bestimmten Voraussetzungen kann es sich als vorteilhaft erweisen, daß die Vorrichtung zur Datenspiegelung ein Computersystem 2A mit Speichereinrichtungen umfaßt, und die Vorrichtung derart eingerichtet ist, daß ein Verfahren zur Datenspiegelung gemäß Anspruch 12 durchführbar ist, indem eine Kopie des im Echtdatenspeicher 3 des Computersystems 2A enthaltenen Originaldatenbestandes in einem vom Echtdatenspeicher 3 unabhängigen Speicherbereich dieses Computersystems 2A, dem Endspeicher 5, abgelegt wird und anschließend alle Informationen über Änderungen des Originaldatenbestandes, die Veränderungsdaten, in einem weiteren unabhängigen Speicherbereich, dem Zwischenspeicher 6, zwischengespeichert und, gesteuert durch ein Computerprogramm, nach einer einstellbaren zeitlichen Verzögerung dem Endspeicher 5 zugeführt werden, wenn der durch das Computerprogramm überwachte Zustand des Computersystems 2A nicht von einem definierten Zustand abweicht, und andernfalls mit Hilfe des Computerprogramms aus den im Endspeicher 5 vorhandenen Daten zusammen mit der Veränderungsdatenmenge ein durch vorgebbare Parameter definierter Zustand des Originaldatenbestandes rekonstruiert wird, indem durch Verarbeitung der im Zwischenspeicher 6 abgelegten Veränderungsdatenmenge die fehlerfreien Änderungen des Originaldatenbestandes im Endspeicher 5 nachvollzogen werden.

In diesen Fällen sieht eine bevorzugte Ausführungsform vor, daß die Vorrichtung zur Datenspiegelung aus einem Computersystem 2A mit Speichereinrichtungen und einem durch einen Timer steuerbaren Programm besteht, wobei der aktuelle Originaldatenbestand in einem Teil der Speichereinrichtung, dem Echtdatenspeicher 3, enthalten ist, und in einem davon unabhängigen Teil der Speichereinrichtung, dem Endspeicher 5, ältere Versionen dieses Originaldatenbestands sowie in einem dritten unabhängigen Teil der Speichereinrichtung, dem Zwischenspeicher 6, die Veränderungsdatenmenge, welche alle Informationen über die auf dem Computersystem 2A ausgeführten Aktionen enthält, die von den älteren Versionen zum aktuellen Zustand des Originaldatenbestandes geführt haben, abgespeichert sind, und das Programm dazu dient, die gesamte Vorrichtung und das Verfahren zu überwachen sowie die automatische Ersetzung des Originaldatenbestandes durch eine der älteren Versionen anhand vorgebbarer Kriterien zu steuern.

Die verlustfreie Datensicherung durch Rekonstruktion des letzten fehlerfreien Zustandes eines ursprünglichen, auf einem Echt-Computersystem befindlichen Originaldatenbestandes, ein schnelles Ersetzen eines fehlerhaften Echt-Computersystems durch ein Spiegel-Computersystem und ein hoher Schutz vor Brand, Hochwasser, Blitzschlag, Vandalismus und anderen Katastrophen durch unabhängige Standorte der einzelnen Computersysteme wird gewährleistet, indem eine Kopie der Datenmenge eines ersten Echt-Computersystems 2 in einem Speicherbereich, dem Endspeicher 5, von mindestens einem zweiten, vom Echt-Computersystem 2 unabhängigen Spiegel-Computersystem 4 abgelegt wird und anschließend alle Informationen über Änderungen des Echt-Computersystems 2 an die Spiegel-Computersysteme 4 übertragen, dort zwischengespeichert und, gesteuert durch ein Computerprogramm, nach einer einstellbaren zeitlichen Verzögerung dem Endspeicher 5 zugeführt werden, wenn der durch das Computerprogramm überwachte Zustand der Computersysteme nicht von einem definierten Zustand abweicht, und andernfalls mit Hilfe des Computerprogramms aus den im Endspeicher 5 des Spiegel-Computersystems 4 vorhandenen Daten zusammen mit der Veränderungsdatenmenge ein durch vorgebbare Parameter definierter Zustand des Echt-Computersystems 2 rekonstruiert wird, indem durch Verarbeitung der im Zwischenspeicher 6 des Spiegel-Computersystems 4 abgelegten Veränderungsdatenmenge die fehlerfreien Zustandsänderungen des Echt-Computersystems 2 auf dem Spiegel-Computersystem 4 nachvollzogen werden. Falls die Gefahr einer Beschädigung der Computersysteme durch Vandalismus oder Katastrophen nur gering ist, läßt sich die Datensicherung auch durchführen, indem eine Kopie des im Echtdatenspeicher 3 eines Computersystems 2A enthaltenen Originaldatenbestandes in einem vom Echtdatenspeicher 3 unabhängigen Speicherbereich dieses Computersystems 2A, dem Endspeicher 5, abgelegt wird und anschließend alle Informationen über Änderungen des originaldatenbestandes, die Veränderungsdaten, in einem weiteren unabhängigen Speicherbereich, dem Zwischenspeicher 6, zwischengespeichert und, gesteuert durch ein Computerprogramm, nach einer einstellbaren zeitlichen Verzögerung dem Endspeicher 5 zugeführt werden, wenn der durch das Computerprogramm überwachte Zustand des Computersystems 2A nicht von einem definierten Zustand abweicht, und andernfalls mit Hilfe des Computerprogramms aus den im Endspeicher 5 vorhandenen Daten zusammen mit der Veränderungsdatenmenge ein durch vorgebbare Parameter definierter Zustand des Originaldatenbestandes rekonstruiert wird, indem durch Verarbeitung der im Zwischenspeicher 6 abgelegten Veränderungsdatenmenge die fehlerfreien Änderungen des Originaldatenbestandes im Endspeicher 5 nachvollzogen werden.

Die Erfindung soll nachstehend anhand von einem zumindest teilweise in den Figuren dargestellten Ausführungsbeispielen näher erläutert werden.

Es zeigen:

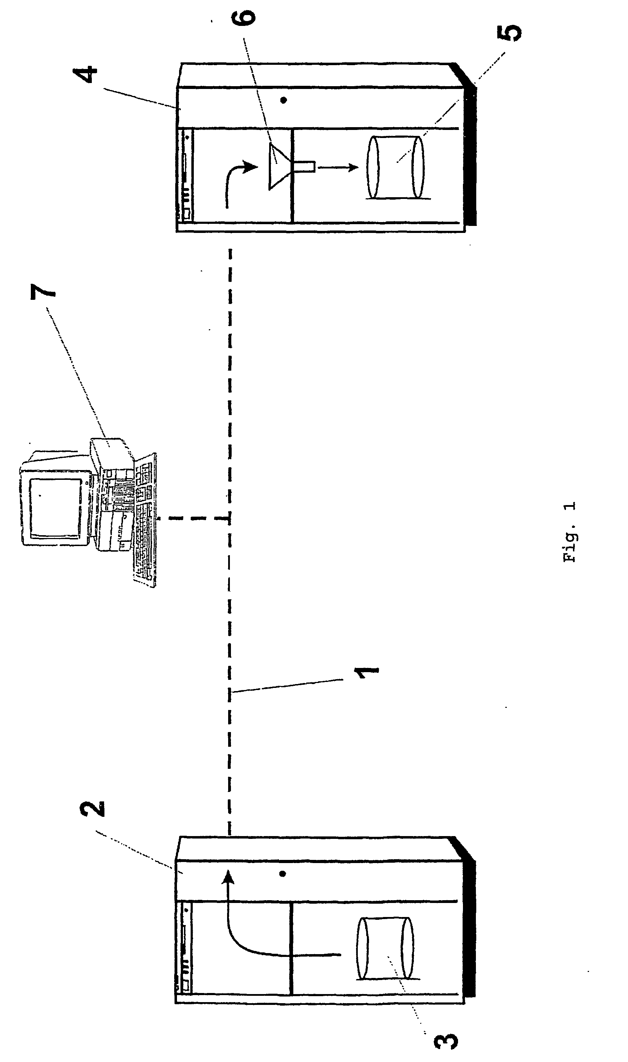

- Fig. 1: Darstellung einer aus mehreren Computersystemen und einem Graphischen Leitstand bestehenden Vorrichtung

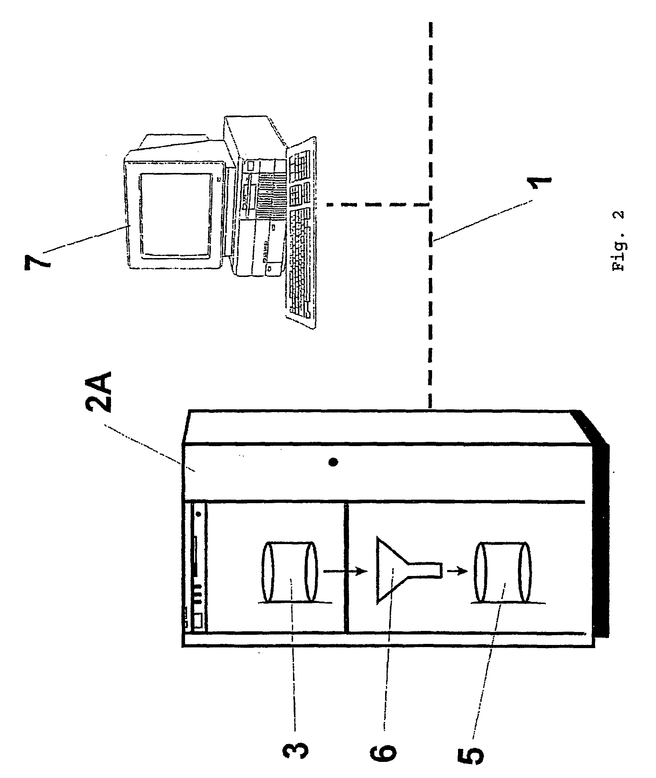

- Fig. 2: Darstellung einer aus einem Computersystem und einem Graphischen Leitstand realisierten Vorrichtung
- Fig. 3: Das Funktionsprinzip der Zeitverzögerung ("Zeittrichter")
- Fig. 4: Beispiel einer Graphischen Bedienoberfläche

Das erfindungsgemäße Verfahren erlaubt es, Daten auf einem oder mehreren Systemen im Netz zu spiegeln. Hierbei handelt es sich nicht um eine physikalische, sondern um eine logische Spiegelung. Vorrichtung und Verfahren zeichnen sich durch eine einfache Bedienung, maximale Datensicherheit, schnellen Wiedereinsatz der Systeme nach Störungen und geringe Belastung der Öbertragungswege und der Spiegel-Computersysteme aus.

Das Verfahren zur Datenspiegelung wird durch ein Computerprogramm realisiert, welches auf dem Echt-Computersystem 2 und den verwendeten Spiegel-Computersystemen 4 installiert wird. Zusätzlich kann der Zustand der am Verfahren beteiligten Computersysteme auf einem (oder auch mehreren) sog. Graphischen Leitstand 7 angezeigt und beeinflußt werden. Als Graphischer Leitstand 7 können sowohl Echt- 2 als auch Spiegel-Computersysteme 4 dienen, aber auch externe Geräte wie z. B. ein Funktelefon. Dieser Graphische Leitstand 7 bietet eine übersichtliche Darstellung des aktuellen Zustands der beteiligten Systeme, wodurch die Bedienung wesentlich erleichtert wird. Für Eingriffe in den Ablauf des Verfahrens ist man somit nicht auf einen Systemspezialisten angewiesen. Dies ist vor allem im Störfall von Bedeutung, da man für das verlustfreie Umschalten auf ein funktionsfähiges System nicht nur auf einen kleinen, speziellen Personenkreis eingeschränkt ist. Die Ausfallzeiten werden dadurch weiter reduziert. Die Steuerung des Verfahrens erfolgt automatisch durch mehrere Prozesse des Computerprogramms, welche der Überwachung der gesamten Vorrichtung und des Verfahrens, der Kommunikation zwischen Graphischen Leitstand 7 und den Computersystemen sowie der Computersysteme untereinander, der Überwachung des Echt-Computersystems 2, der Übertragung der Archiv-Files zu den Spiegel-Computersystemen 4, der definierten Wiederherstellung des Originaldatenbestandes und dem Hochfahren des Spiegeldatenbestandes dienen. Für die Kommunikation und Synchronisation der Prozesse werden shared memories und semaphores genutzt. Diese Prozesse überwachen sich gegenseitig; wenn ein Prozeß ausfällt, wird er automatisch wieder nachgestartet.

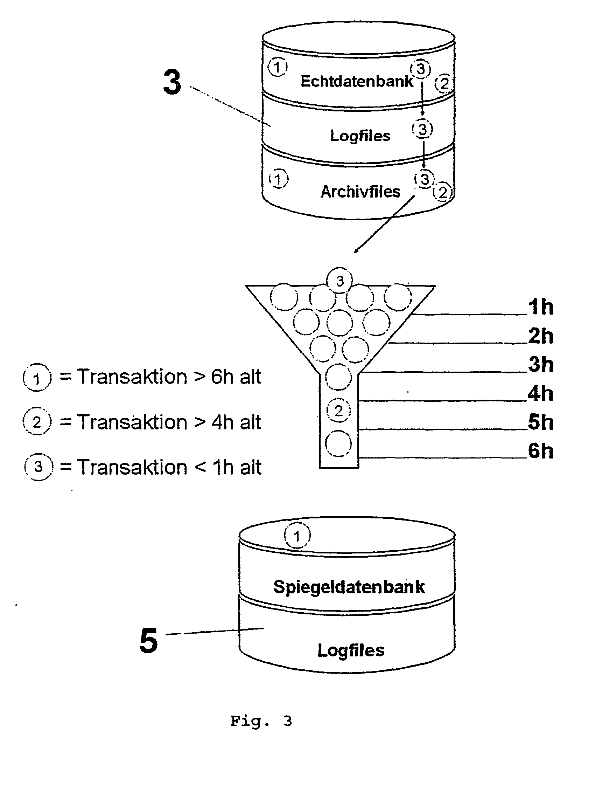

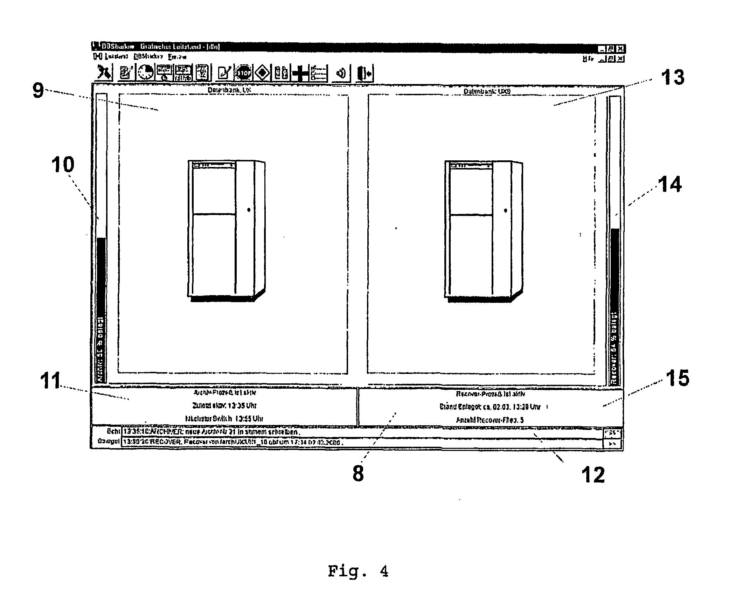

Nachdem die Installation über den Graphischen Leitstand 7, von einem ASCII-Leitstand aus oder auch über ein Shell-Interface als Command-Line-Eingabe erfolgt und das Verfahren zur Datenspiegelung gestartet ist, wird in einem ersten Schritt der Originaldatenbestand des Echtsystems 2 auf das Spiegelsystem 4 kopiert. Das ist auch bei laufendem Betrieb möglich. Der Kopiervorgang erfolgt mittels spezieller (TCP/IP-)Socket-Programme, da diese Art der Datenkommunikation sehr schnell und sicher ist. Hierfür wird ein eigener Port benutzt. Darüber hinaus stellt das Verfahren mit dem sequentiellen, parallelen und komprimierten Kopiervorgang drei Optionen zur Datenübertragung zur Verfügung. Zusätzlich erlaubt das Verfahren, die Kopie des Originaldatenbestands per externem Backup in die Spiegelsysteme 4 zu laden. Die File-Systeme und Festplatten-Strukturen der Spiegel-Computersysteme 4 können sich von dem des Echt-Computersystems 2 unterscheiden. Es ist lediglich gefordert, daß auf allen Systemen die gleiche Betriebssystemversion installiert ist. Das bzw. die Spiegelsysteme 4 können so weit vom Echtsystem 2 entfernt sein, wie es die Ausdehnung des Datenkommunikationsnetzes 1, in welchem die Systeme eingebunden sind, zuläßt. Hierdurch ist ein optimaler Katastrophenschutz (Brand, Blitzschlag, Hochwasser etc.) gewährleistet. Das Verfahren erlaubt es, Datenspiegelungen durchaus interkontinental durchzuführen. Durch die Möglichkeit sicherer, derartiger Datentransfers zeichnet sich das Verfahren besonders aus; denn durch spezielle Features garantiert das Verfahren, daß die hierbei an die Datensicherheit gestellten strengen Bedingungen erfüllt werden. Neben der Verschlüsselung der übertragenen Information wird vom Verfahren gleichzeitig eine hohe Datenkompression zur Verfügung gestellt, durch welche die Übertragungszeiten reduziert werden, indem die Bandbreiten - speziell das Bandbreitenverhalten langer Leitungen wird unterstützt - optimal ausgenutzt werden. Ein weiterer Vorteil des Verfahrens ergibt sich aus der Möglichkeit, daß es in andere Überwachungsprogramme oder Management-Software integriert werden kann.
Nachdem die Kopie des Originaldatenbestands auf den Spiegel systemen 4 angelegt ist, werden alle auf dem Echtsystem 2 vorgenommenen, in Archiv-Files dokumentierten Veränderungen auf die Spiegelsysteme 4 kopiert, jedoch noch nicht nachvollzogen. Diese Veränderungen werden stattdessen erst einem "Zeittrichter" zugeführt, in welchem sie eine Zeitlang ruhen, bevor sie auch auf dem Spiegelsystem 4 ausgeführt und damit dem Enddatenspeicher 5 zugeführt werden (Fig. 3). Der "Zeittrichter" ist die wichtigste Komponente von Vorrichtung und Verfahren; er besteht aus einem Speicherbereich - dem Zwischendatenspeicher 6 -, welcher in der Regel auf der Festplatte der beteiligten Spiegel-Computersysteme 4 eingerichtet ist, den vom Echt-Computersystem 2 stammenden, in diesem Zwischendatenspeicher 6 abgelegten Archiv-Files und einem Modul des Computerprogramms, welches, vom Timer gesteuert, die Weiterverarbeitung der Archiv-Files realisiert. Die Übertragung der Archiv-Files vom Echtsystem 2 zu den Spiegelsystemen 4 wird durch Parameter gesteuert, welche die Bedingungen vorgeben, unter denen eine Übertragung stattfindet: das kann z. B. ein zeitliches Intervall sein, nach dem jeweils die vorhandenen Archiv-Files übertragen werden, oder aber die Übertragung erfolgt, sobald das Archiv-File eine bestimmte Größe erreicht hat. Darüber hinaus besteht die Möglichkeit, jederzeit die Parameter des Programms zu verändern, indem man sie über die graphische Bedienoberfläche 8 (Fig. 4) des Graphischen Leitstandes 7 modifiziert oder dafür Shell-Interfaces benutzt. Die Verweildauer der Archiv-Files im Zwischendatenspeicher 6 des "Zeittrichters" ist in einem weiten Bereich (0 Minuten bis zu einigen Tagen) und für jedes Spiegelsystem 4 unabhängig frei einstellbar. Außerdem ist es möglich, für verschiedene Zeitintervalle auch unterschiedliche Verweildauern für die Archiv-Files im Zwischendatenspeicher 6 festzulegen, z. B. kann im Normalbetrieb innerhalb der Woche die Verweildauer herabgesetzt werden, während sie für die Tage des Wochenendes sehr hoch eingestellt wird. Durch diesen zeitversetzten Nachvollzug aller Veränderungen des Originaldatenbestands ist man in der Lage, leicht alle fehlerhaften Aktionen auf dem Spiegelsystem 4 zu verhindern, indem man den Spiegelungsprozeß stoppt, bevor die fehlerhafte Aktion den "Zeittrichter" verläßt und ausgeführt werden würde. Da aber alle vorangehenden korrekten Veränderungen ausgeführt werden, ist in der Spiegeldatenbank wirklich der letzte Stand des Echtdatenbestands gerettet. Erkennt das Programm im System eine fehlerhafte Aktion, so sendet es, verbunden mit einem akustischen Signal, eine Warnung oder eine Fehlermeldung an den Graphischen Leitstand 7 oder andere Programme, in die das Verfahren, wie oben beschrieben, gegebenenfalls integriert ist. Das gestörte System wird auf der graphischen Bedienoberfläche 8 des Graphischen Leitstands 7 farblich hervorgehoben, wobei der Status der Meldung (Warnung, Fehler, ...) durch verschiedene Farben angezeigt wird. Darüber hinaus besteht die Möglichkeit, Meldungen an externe Geräte zu übermitteln; z. B. per SMS oder e-mail an ein Funktelefon, über welches man dann ebenfalls Befehle an das Computerprogramm senden kann, um das Verfahren zu steuern, indem das Funktelefon als Graphischer Leitstand 7 dient. Im Störfall kann somit schnell auf eine der Spiegeldatenbanken umgeschaltet und ohne Datenverlust weitergearbeitet werden. Das Verfahren erkennt, ob ein Hardware-Fehler oder ein Bedien- bzw. Software-Fehler zu einer Störung geführt hat. Bei einem Hardware-Fehler auf dem Echtsystem 2 kann sofort, automatisch verlustfrei auf das Spiegelsystem 4 umgeschaltet werden. Bei Bedien- bzw. Software-Fehlern kann exakt bestimmt werden, auf welchen Stand die Spiegeldatenbank rekonstruiert werden soll. Die im "Zeittrichter" befindlichen Aktionen werden nun schnell bis zu dem angegebenen Zeitpunkt ausgeführt, und der aktuelle Datenbestand steht auf dem Spiegelsystem 4 wieder zur Verfügung. Nach Beseitigung der Fehlerursache wird der auf dem Spiegelsystem 4 befindliche Datenbestand auf das Echtsystem 2 zurückkopiert und der Normalbetrieb wiederhergestellt.

Die Erfindung ist nicht beschränkt auf die hier dargestellten Ausführungsbeispiele. Vielmehr ist es möglich, durch Kombination und Modifikation der genannten Mittel und Merkmale weitere Ausführungsvarianten zu realisieren, ohne den Rahmen der Erfindung zu verlassen.

### Bezugszeichenliste

- 1: Datenkommunikationsnetz
- 2: Echt-Computersystem
- 2A: Comptersystem, in dem Echt-, Zwischen- und Enddatenspeicher angeordnet sind
- 3: Echtdatenspeicher
- 4: Spiegel-Computersystem
- 5: Enddatenspeicher
- 6: Zwischendatenspeicher
- 7: Graphischer Leitstand
- 8: Graphische Bedienoberfläche
- 9: Anzeige des Echt-Computersystems
- 10: Anzeige der Speicherbelegung im Echt-Computersystem
- 11: Anzeige des Status des Echt-Computersystems
- 12: Anzeige der letzten ausgeführten Aktionen des Spiegelungsverfahrens
- 13: Anzeige des Spiegel-Computersystems
- 14: Anzeige der Speicherbelegung im Spiegel-Computersystem
- 15: Anzeige des Status des Spiegel-Computersystems

## Patentansprüche

1. Vorrichtung zur Datenspiegelung, umfassend mindestens zwei Computersysteme mit Speichereinrichtungen, wobei die Computersysteme durch Mittel zur Datenübertragung (1) miteinander verbunden sind, und die Vorrichtung derart eingerichtet ist, daß ein Verfahren zur Datenspiegelung gemäß Anspruch 11 durchführbar ist, indem eine Kopie der Datenmenge eines ersten Echt-Computersystems (2) in einem Speicherbereich, dem Endspeicher (5), von mindestens einem zweiten, vom Echt-Computersystem (2) unabhängigen Spiegel-Computersystem (4) abgelegt wird und anschließend alle Informationen über Änderungen des Echt-Computersystems (2) an das/die Spiegel-Computersystem(e) (4) übertragen, und dort zwischengespeichert werden, **dadurch gekennzeichnet, daß** die genannten Informationen, gesteuert durch ein Computerprogramm, nach einer einstellbaren zeitlichen Verzögerung dem Endspeicher (5) zugeführt werden, wenn der durch das Computerprogramm überwachte Zustand der Computersysteme nicht von einem definierten Zustand abweicht, und andernfalls mit Hilfe des Computerprogramms aus den im Endspeicher (5) des Spiegel-Computersystems (4) vorhandenen Daten zusammen mit der Veränderungsdatenmenge ein durch vorgebbare Parameter definierter Zustand des Echt-Computersystems (2) rekonstruiert wird, indem durch Verarbeitung der im Zwischenspeicher (6) des Spiegel-Computersystems (4) abgelegten Veränderungsdatenmenge die fehlerfreien Zustandsänderungen des Echt-Computersystems (2) auf dem Spiegel-Computersystem (4) nachvollzogen werden.

2. Vorrichtung zur Datenspiegelung, umfassend ein Computersystem (2A) mit Speichereinrichtungen, wobei die Vorrichtung derart eingerichtet ist, daß ein Verfahren zur Datenspiegelung gemäß Anspruch 12 durchführbar ist, indem eine Kopie des im Echtdatenspeicher (3) des Computersystems (2A) enthaltenen Originaldatenbestandes in einem vom Echtdatenspeicher (3) unabhängigen Speicherbereich dieses Computersystems (2A), dem Endspeicher (5), abgelegt wird und anschließend alle Informationen über Änderungen des Originaldatenbestandes, die Veränderungsdaten, in einem weiteren unabhängigen Speicherbereich, dem Zwischenspeicher (6), zwischengespeichert werden, **dadurch gekennzeichnet, daß** die genannten Informationen, gesteuert durch ein Computerprogramm, nach einer einstellbaren zeitlichen Verzögerung dem Endspeicher (5) zugeführt werden, wenn der durch das Computerprogramm überwachte Zustand des Computersystems (2A) nicht von einem definierten Zustand abweicht, und andernfalls mit Hilfe des Computerprogramms aus den im Endspeicher (5) vorhandenen Daten zusammen mit der Veränderungsdatenmenge ein durch vorgebbare Parameter definierter Zustand des Originaldatenbestandes rekonstruiert wird, indem durch Verarbeitung der im Zwischenspeicher (6) abgelegten Veränderungsdatenmenge die fehlerfreien Änderungen des Originaldatenbestandes im Endspeicher (5) nachvollzogen werden.

3. Vorrichtung zur Datenspiegelung nach Anspruch 1,
**dadurch gekennzeichnet, daß**
neben einem ersten Spiegel-Computersystem (4) noch weitere Spiegel-Computersysteme angeordnet sind.

4. Vorrichtung zur Datenspiegelung nach mindestens einem der Ansprüche 1 bis 3,
**dadurch gekennzeichnet, daß**
die Steuerung des Verfahrens über eine graphische Bedienoberfläche (8) erfolgt.

5. Vorrichtung zur Datenspiegelung nach mindestens einem der Ansprüche 1 oder 3 oder 4,
**dadurch gekennzeichnet, daß**
die graphische Bedienoberfläche (8) auf
- dem Echt-Computersystem (2) und/oder
- dem Spiegel-Computersystem (4) und/oder
- einem separaten Computer, dem Graphischen Leitstand (7) und/oder
- einem Funktelefon
zur Verfügung steht.

6. Vorrichtung zur Datenspiegelung nach mindestens einem der Ansprüche 2 bis 4,
**dadurch gekennzeichnet, daß**
die graphische Bedienoberfläche (8) auf
- dem Computersystem (2A) und/oder
- einem separaten Computer, dem Graphischen Leitstand (7) und/oder
- einem Funktelefon
zur Verfügung steht.

7. Vorrichtung zur Datenspiegelung nach mindestens einem der Ansprüche 1 bis 3,
**dadurch gekennzeichnet, daß**
der Zwischenspeicher als First-in-First-Out-Speicher ausgebildet ist.

8. Vorrichtung zur Datenspiegelung nach mindestens einem der Ansprüche 1 bis 7,
**dadurch gekennzeichnet, daß**
die Mittel zur Datenübertragung Kabelnetze und/oder Funknetze sind.

9. Vorrichtung zur Datenspiegelung nach mindestens einem der Ansprüche 1 bis 8,
**dadurch gekennzeichnet, daß**
mehrere Mittel zur Datenübertragung für den parallelen Datenaustausch zur Verfügung stehen.

10. Vorrichtung zur Datenspiegelung nach mindestens einem der Ansprüche 1 oder 3 bis 9,
**dadurch gekennzeichnet, daß**
die eingesetzten Computersysteme hinsichtlich ihrer Struktur und/oder gerätetechnischen Ausstattung unterschiedlich ausgebildet sind.

11. Verfahren zur Datenspiegelung,
wobei eine Kopie der Datenmenge eines ersten Echt-Computersystems (2) in einem Speicherbereich, dem Endspeicher (5), von mindestens einem zweiten, vom Echt-Computersystem (2) unabhängigen Spiegel-Computersystem (4) abgelegt wird und anschließend alle Informationen über Änderungen des Echt-Computersystems (2) an die Spiegel-Computersysteme (4) übertragene und, dort zwischengespeichert werden, **dadurch gekennzeichnet, daß** die genannten Informationen, gesteuert durch ein Computerprogramm, nach einer einstellbaren zeitlichen Verzögerung dem Endspeicher (5) zugeführt werden, wenn der durch das Computerprogramm überwachte Zustand der Computersysteme nicht von einem definierten Zustand abweicht, und andernfalls mit Hilfe des Computerprogramms aus den im Endspeicher (5) des Spiegel-Computersystems (4) vorhandenen Daten zusammen mit der Veränderungsdatenmenge ein durch vorgebbare Parameter definierter Zustand des Echt-Computersystems (2) rekonstruiert wird, indem durch Verarbeitung der im Zwischenspeicher (6) des Spiegel-Computersystems (4) abgelegten Veränderungsdatenmenge die fehlerfreien Zustandsänderungen des Echt-Computersystems (2) auf dem Spiegel-Computersystem (4) nachvollzogen werden.

12. Verfahren zur Datenspiegelung,
wobei eine Kopie des im Echtdatenspeicher (3) eines Computersystems (2A) enthaltenen Originaldatenbestandes in einem vom Echtdatenspeicher (3) unabhängigen Speicherbereich dieses Computersystems (2A), dem Endspeicher (5), abgelegt wird und anschließend alle Informationen über Änderungen des Originaldatenbestandes, die Veränderungsdaten, in einem weiteren unabhängigen Speicherbereich, dem Zwischenspeicher (6), zwischengespeichert werden, **dadurch gekennzeichnet, daß** die genannten Informationen, gesteuert durch ein Computerprogramm, nach einer einstellbaren zeitlichen Verzögerung dem Endspeicher (5) zugeführt werden, wenn der durch das Computerprogramm überwachte Zustand des Computersystems (2A) nicht von einem definierten Zustand abweicht, und andernfalls mit Hilfe des Computerprogramms aus den im Endspeicher (5) vorhandenen Daten zusammen mit der Veränderungsdatenmenge ein durch vorgebbare Parameter definierter Zustand des Originaldatenbestandes rekonstruiert wird, indem durch Verarbeitung der im Zwischenspeicher (6) abgelegten Veränderungsdatenmenge die fehlerfreien Änderungen des Originaldatenbestandes im Endspeicher (5) nachvollzogen werden.

13. Verfahren zur Datenspiegelung nach einem der Ansprüche 11 oder 12,
**dadurch gekennzeichnet, daß**
die Daten komprimiert und/oder verschlüsselt übertragen werden.

14. Verfahren zur Datenspiegelung nach einem der Ansprüche 11 bis 13,
**dadurch gekennzeichnet, daß**
die Übertragung der Daten parallel über mehrere Datenübertragungswege erfolgt.

15. Verfahren zur Datenspiegelung nach einem der Ansprüche 11 bis 14,
**dadurch gekennzeichnet, daß**
die Übertragung der Daten nach
- vorgegebenen zeitlichen Intervallen und/oder
- beim Erreichen einer vorgegebenen Größe der zu übertragenden Datenmenge
erfolgt.

16. Verfahren zur Datenspiegelung nach einem der Ansprüche 11 bis 15,
**dadurch gekennzeichnet, daß**
das Verfahren Warnungen, Fehlermeldungen oder andere Informationen an andere Computerprogramme und/oder externe Systeme sendet.

17. Verfahren zur Datenspiegelung nach einem der Ansprüche 11 bis 16,
**dadurch gekennzeichnet, daß**
das externe System ein Funktelefon ist.

18. Verfahren zur Datenspiegelung nach einem der Ansprüche 11 bis 17,
**dadurch gekennzeichnet, daß**
im Falle der Abweichung des Zustandes des Echt-Computersystems (2) von einem definierten Zustand die im Zwischendatenspeicher (6) befindlichen Daten nach vorgegebenen Regeln automatisch in den Enddatenspeicher (5) überführt und die Parameter des Computerprogramms automatisch so geändert werden, daß durch diese Änderung eins der Spiegel-Computersysteme (4) vollständig die Aufgaben des ursprünglichen Echt-Computersystems (2) übernimmt.

19. Verfahren zur Datenspiegelung nach einem der Ansprüche 11 bis 18,
**dadurch gekennzeichnet, daß**
nach dem Wandel eines Spiegel-Computersystems zum Echt-Computersystem das ehemalige Echt-Computersystem als Spiegel-Computersystem konfiguriert wird, d. h.: die Kopie der Datenmenge des aktuellen Echt-Computersystems wird im Endspeicher des neuen Spiegel-Computersystems abgelegt, und es werden anschließend alle Informationen über Änderungen des aktuellen Echt-Computersystems an das neue Spiegel-Computersysteme übertragen, dort zwischengespeichert und, gesteuert durch das Computerprogramm, nach einer einstellbaren zeitlichen Verzögerung dem auf dem neuen Spiegel-Computersystem befindlichen Endspeicher zugeführt.

20. Verfahren zur Datenspiegelung nach einem der Ansprüche 11 bis 19,
**dadurch gekennzeichnet, daß**
die Kopie des Originaldatenbestandes in den Enddatenspeicher (5) der Spiegel-Computersysteme (4) über die Mittel zur Datenübertragung erfolgt.

21. Verfahren zur Datenspiegelung nach einem der Ansprüche 11 bis 19,
**dadurch gekennzeichnet, daß**
die Kopie des Originaldatenbestandes in den Enddatenspeicher (5) der Spiegel-Computersysteme (4) über ein externes Backup erfolgt.

## Claims

1. A device for data mirroring, comprising at least two computer systems with memory devices, wherein said computer systems are connected via means for data transmission (1), and the device being set up such that a method for data mirroring according to claim 11 is being executable by storing a copy of a data set of a first genuine computer system (2) in a memory unit, the final memory (5), of at least one second mirror computer system (4) being independent of the genuine computer system (2), and subsequently by transmitting all information related to variations of the genuine computer system (2) to and buffering in the mirror computer system(s) (4), **characterized by** supplying said information, controlled by a computer program, to the final memory (5) after an adjustable time lag, if the state of the computer systems being monitored by the computer program does not diverge from a defined state, and otherwise by reconstructing with the help of the computer program a state of the genuine computer system (2) defined by presetable parameters using the data present in the final memory (5) of the mirror computer system (4) together with the variation data set by retracing through processing of the variation data set stored in the buffer (6) of the mirror computer system (4) the error free state variations of the genuine computer system (2) on the mirror computer system (4).

2. A device for data mirroring, comprising a computer system (2A) with memory devices, wherein the device is being set up such way that a method for data mirroring according to claim 12 is being executable, by storing a copy of the original data set contained in the genuine data memory (3) of the computer system (2A) in a memory unit, the final memory (5), independent of the genuine data memory (3), and subsequently by buffering all information about variations of the original data set, the variation data, in a further independent memory unit, the buffer (6), **characterized by** supplying said information, controlled by a computer program, to the final memory (5) after an adjustable time lag, if the state of the computer system (2A) being monitored by the computer program does not diverge from a defined state, and otherwise by reconstructing with the help of the computer program a state of the original data set defined bv presetable parameters using the data present in the final memory (5) together with the variation data set by retracing through processing of the variation data set stored in the buffer (6) the error free state variations of the original data set in the final memory (5).

3. Device for data mirroring according to claim 1, **characterized by** providing further mirror computer systems in addition to a first mirror computer system (4).

4. Device for data mirroring according to at least one of the claims 1 to 3, **characterized by** carrying out the control of the method via a graphical user interface (8).

5. Device for data mirroring according to at least one of the claims 1 or 3 or 4, **characterized in that** the graphical user interface (8) is available on
- the genuine computer system (2), and/or
- the mirror computer system (4), and/or
- a separate computer, the graphical control station (7), and/or
- a cellular telephone.

6. Device for data mirroring according to at least one of the claims 2 to 4, **characterized in that** the graphical user interface (8) is available on
- the computer system (2A), and/or
- a separate computer, the graphical control station (7), and/or
- a cellular telephone.

7. Device for data mirroring according to at least one of the claims 1 to 3, **characterized in that** the buffer is provided as a first-in-first-out memory.

8. Device for data mirroring according to at least one of the claims 1 to 7, **characterized in that** the means for data transmission are cable networks and/or radio networks.

9. Device for data mirroring according to at least one of the claims 1 to 8, **characterized in that** several means for data transmission are being provided for parallel data exchange.

10. Device for data mirroring according to at least one of the claims 1 or 3 to 9, **characterized by** providing the employed computer systems different regarding their structure and/or device-related equipment.

11. Method for data mirroring, wherein a copy of the data set of a first genuine computer system (2) is being stored in a memory unit, the final memory (5), of at least a second mirror computer system (4) being independent of the genuine computer system (2) and subsequently all information about variations of the genuine computer system (2) is being transmitted to the mirror computer systems (4) and buffered there, **characterized by** supplying said information, controlled by a computer program, to the final memory (5) after an adjustable time lag, if the state of the computer systems being monitored by the computer program does not diverge from a defined state, and otherwise by reconstructing with help of the computer program a state of the genuine computer system (2) defined by presetable parameters using the data present in the final memory (5) of the mirror computer system (4) together with the variation data set by retracing through processing of the variation data set stored in the buffer (6) of the mirror computer system (4) the error free state variations of the genuine computer system (2) on the mirror computer system (4).

12. A method for data mirroring, wherein a copy of the original data set being present in the genuine data memory (3) of a computer system (2A) is being stored in a memory unit of said computer system (2A), the final memory (5), being independent of the genuine data memory (3), and subsequently all information about variations of the original data set, the variation data, are being buffered in a further independent memory unit, the buffer (6), **characterized by** supplying said information, controlled by a computer program, to the final memory (5) after an adjustable time lag, if the state of the computer system (2A) being monitored by the computer program does not diverge from a defined state, and otherwise by reconstructing with help of the computer program a state of the original data set defined by presetable parameters using the data present in the final memory (5) together with the variation data set by retracing through processing of the variation data set stored in the buffer (6) the error free state variations of the original data set in the final memory (5).

13. Method for data mirroring according to one of the claims 11 or 12, **characterized by** transmitting the data compressed and/or encrypted.

14. Method for data mirroring according to one of the claims 11 to 13, **characterized by** carrying out the transmission of data in parallel via several data transmission paths.

15. Method for data mirroring according to one of the claims 11 to 14, **characterized in that** the transmission of data is being carried out after
- a predefined time interval and/or
- reaching a predefined size of the data set to be transmitted.

16. Method for data mirroring according to one of the claims 11 to 15, **characterized in that** the method emits warnings, error messages or other information to other computer programs and/or external systems.

17. Method for data mirroring according to one of the claims 11 to 16, **characterized in that** the external system is a cellular phone.

18. Method for data mirroring according to one of the claims 11 to 17, **characterized by** automatically transferring, in the event of a divergence of the state of the genuine computer system (2) from a predefined state, the data present in the buffer (6) to the final memory (5) following predefined rules, and the by automatically altering the parameters of the computer program such that through the alteration one of the mirror computer systems (4) takes over the tasks of the former genuine computer system (2) completely.

19. Method for data mirroring according to one of the claims 11 to 18, **characterized in that** after the alteration of a mirror computer system into a genuine computer system the former genuine computer system is being configured as a mirror computer system, i.e. the copy of the data set of the actual genuine computer system is being stored in the final memory of the new mirror computer system, and all information regarding modifications of the actual genuine computer system are subsequently being transmitted to the new mirror computer system, buffered there, and, controlled by the computer program, after an adjustable time lag, are being supplied to the final memory on the new mirror computer system.

20. Method for data mirroring according to one of the claims 11 to 19, **characterized in that** the copy of the original data set to the final memory (5) of the mirror computer systems (4) is being carried out through means for data transmission.

21. Method for data mirroring according to one of the claims 11 to 19, **characterized in that** the copy of the original data set to the final memory (5) of the mirror computer systems (4) is being carried through an external backup.

## Revendications

1. Dispositif pour la réflexion de données, comprenant au moins deux systèmes d'ordinateur avec des dispositifs de mémorisation, les systèmes d'ordinateur étant reliés entre eux par des moyens de communication de données (1) et le dispositif étant ajusté de manière à rendre exécutable un procédé pour la réflexion de données selon la revendication 11, en archivant une copie de la quantité des données d'un premier système d'ordinateur réel (2) dans une zone de mémoire, la mémoire terminale (5), d'au moins un deuxième système réflexif d'ordinateur (4) indépendant du système d'ordinateur réel (2), et en transmettant ensuite au(x) système (s) réflexif(s) d'ordinateur (4) et en mémorisant temporairement toutes les informations sur les modifications du système d'ordinateur réel (2), **caractérisé en ce que** lesdites informations commandées par un programme informatique, sont conduites vers la mémoire terminale (5) après une temporisation réglable, quand l'état des systèmes d'ordinateur surveillé par le programme informatique ne s'écarte pas d'un état défini, et qu'un état du système d'ordinateur réel (2), défini par des paramètres prescriptibles, est reconstruit sinon, au moyen du programme informatique à partir des données présentes avec la quantité des données de modification dans la mémoire terminale (5) du système réflexif d'ordinateur (4), en reconstituant sur le système réflexif d'ordinateur (4) les modifications d'état exemptes d'erreurs du système d'ordinateur réel (2) par traitement de la quantité des données de modification archivée dans la mémoire temporaire (6) du système réflexif d'ordinateur (4).

2. Dispositif pour la réflexion de données, comprenant un système d'ordinateur (2A) avec des dispositifs de mémorisation, le dispositif étant ajusté de manière à rendre exécutable un procédé pour la réflexion de données selon la revendication 12, en archivant une copie du stock des données originales contenu dans la mémoire de données réelles (3) du système d'ordinateur (2A) dans une zone de mémoire, la mémoire terminale (5), indépendante de ce système d'ordinateur (2A), et en transmettant ensuite à une autre zone de mémoire indépendante, la mémoire temporaire (6), et en mémorisant temporairement toutes les informations sur les modifications du stock des données originales, les données de modification, **caractérisé en ce que** lesdites informations commandées par un programme informatique, sont conduites vers la mémoire terminale (5) après une temporisation réglable, quand l'état du système d'ordinateur (2A) surveillé par le programme informatique ne s'écarte pas d'un état défini, et qu'un état du stock des données originales, défini par des paramètres prescriptibles, est reconstruit sinon, au moyen du programme informatique à partir des données présentes avec la quantité des données de modification dans la mémoire terminale (5), en reconstituant les modifications d'état exemptes d'erreurs du stock de données originales dans la mémoire terminale (5) par traitement de la quantité des données de modification archivée dans la mémoire temporaire (6).

3. Dispositif pour la réflexion de données selon la revendication 1, **caractérisé en ce que** d'autres systèmes réflexifs d'ordinateur sont disposés à côté d'un premier système réflexif d'ordinateur (4).

4. Dispositif pour la réflexion de données selon l'une des revendications 1 à 3 au moins, **caractérisé en ce que** la commande du processus est effectuée au moyen d'une surface graphique d'utilisateur (8).

5. Dispositif pour la réflexion de données selon l'une des revendications 1 ou 3 ou 4 au moins, **caractérisé en ce que** la surface graphique d'utilisateur (8) est disponible sur
- le système d'ordinateur réel (2) et/ou
- le système réflexif d'ordinateur (4) et/ou
- un ordinateur séparé, le poste de commande graphique (7) et/ou
- un téléphone mobile.

6. Dispositif pour la réflexion de données selon l'une des revendications 2 à 4 au moins, **caractérisé en ce que** la surface graphique d'utilisateur (8) est disponible sur
- le système d'ordinateur (2A) et/ou
- un ordinateur séparé, le poste de commande graphique (7) et/ou
- un téléphone mobile.

7. Dispositif pour la réflexion de données selon l'une des revendications 1 à 3 au moins, **caractérisé en ce que** la mémoire temporaire est formée comme mémoire premier arrivé, premier sorti.

8. Dispositif pour la réflexion de données selon l'une des revendications 1 à 7 au moins, **caractérisé en ce que** les moyens de transmission des données sont des réseaux câblés et/ou des réseaux sans fil.

9. Dispositif pour la réflexion de données selon l'une des revendications 1 à 8 au moins, **caractérisé en ce que** plusieurs moyens de transmission des données sont disponibles pour la communication parallèle de données.

10. Dispositif pour la réflexion de données selon l'une des revendications 1 ou 3 à 9 au moins, **caractérisé en ce que** les systèmes d'ordinateur mis en oeuvre sont différemment formés quant à leur structure et/ou appareillage technique.

11. Dispositif pour la réflexion de données, où une copie de la quantité des données d'un premier système d'ordinateur réel (2) est archivée dans une zone de mémoire, la mémoire terminale (5), d'au moins un deuxième système réflexif d'ordinateur (4) indépendant du système d'ordinateur réel (2), et où sont ensuite transmises aux systèmes réflexifs d'ordinateur (4) où elles sont mémorisées temporairement toutes les informations sur les modifications du système d'ordinateur réel (2), **caractérisé en ce que** lesdites informations commandées par un programme informatique, sont conduites vers la mémoire terminale (5) après une temporisation réglable, quand l'état des systèmes d'ordinateur surveillé par le programme informatique ne s'écarte pas d'un état défini, et qu'un état du système d'ordinateur réel (2), défini par des paramètres prescriptibles, est reconstruit sinon, au moyen du programme informatique à partir des données présentes avec la quantité des données de modification dans la mémoire terminale (5) du système réflexif d'ordinateur (4), en reconstituant sur le système réflexif d'ordinateur (4) les modifications d'état exemptes d'erreurs du système d'ordinateur réel (2) par traitement de la quantité des données de modification archivée dans la mémoire temporaire (6) du système réflexif d'ordinateur (4).

12. Dispositif pour la réflexion de données, où une copie du stock des données originales contenu dans la mémoire de données réelles (3) d'un système d'ordinateur (2A) est archivée dans une zone de mémoire, la mémoire terminale (5), indépendante de ce système d'ordinateur (2A), et où sont ensuite transmises à une autre zone de mémoire indépendante, la mémoire temporaire (6), et mémorisées temporairement toutes les informations sur les modifications du stock des données originales, les données de modification, **caractérisé en ce que** lesdites informations commandées par un programme informatique, sont conduites vers la mémoire terminale (5) après une temporisation réglable, quand l'état du système d'ordinateur (2A) surveillé par le programme informatique ne s'écarte pas d'un état défini, et qu'un état du stock des données originales, défini par des paramètres prescriptibles, est reconstruit sinon, au moyen du programme informatique à partir des données présentes avec la quantité des données de modification dans la mémoire terminale (5), en reconstituant les modifications d'état exemptes d'erreurs du stock de données originales dans la mémoire terminale (5) par traitement de la quantité des données de modification archivée dans la mémoire temporaire (6) .

13. Dispositif pour la réflexion de données selon l'une des revendications 11 ou 12, **caractérisé en ce que** les données sont transmises comprimées et/ou codées.

14. Dispositif pour la réflexion de données selon l'une des revendications 11 à 13, **caractérisé en ce que** la transmission des données est effectuée par plusieurs voies parallèles de transmission des données.

15. Dispositif pour la réflexion de données selon l'une des revendications 11 à 14, **caractérisé en ce que** la transmission des données a lieu selon
- des intervalles temporels prescrits et/ou
- l'obtention d'une grandeur prescrite pour la quantité de données à transmettre.

16. Dispositif pour la réflexion de données selon l'une des revendications 11 à 15, **caractérisé en ce que** le système émet des avertissements, des messages d'erreur ou d'autres informations vers d'autres programmes informatiques et/ou systèmes externes.

17. Dispositif pour la réflexion de données selon l'une des revendications 11 à 16, **caractérisé en ce que** le système externe est un téléphone mobile.

18. Dispositif pour la réflexion de données selon l'une des revendications 11 à 17, **caractérisé en ce qu'**en cas d'écart de l'état du système d'ordinateur réel (2) par rapport à un état défini, les données se trouvant en mémoire temporaire de données (6) sont automatiquement dirigées vers la mémoire terminale de données (5) selon des règles prescrites, et **en ce que** les paramètres du programme informatique sont automatiquement modifiés pour qu'un des systèmes réflexifs d'ordinateur (4) reprenne intégralement les tâches du système initial d'ordinateur réel (2) en raison de cette modification.

19. Dispositif pour la réflexion de données selon l'une des revendications 11 à 18, **caractérisé en ce qu'**après le passage d'un système réflexif d'ordinateur vers le système d'ordinateur réel, l'ancien système d'ordinateur réel est configuré comme système réflexif d'ordinateur, soit : la copie de la quantité des données du système d'ordinateur réel actuel est archivée dans la mémoire terminale du nouveau système réflexif d'ordinateur, et toutes les informations sur les modifications du système d'ordinateur réel actuel sont ensuite transmises au nouveau système réflexif d'ordinateur, où elles sont mémorisées temporairement, et, commandées par le programme informatique, conduites vers la mémoire terminale se trouvant sur le nouveau système réflexif d'ordinateur après une temporisation réglable.

20. Dispositif pour la réflexion de données selon l'une des revendications 11 à 19, **caractérisé en ce que** la copie du stock des données originales dans la mémoire terminale (5) des systèmes réflexifs d'ordinateur (4) est effectuée par les moyens de transmission des données.

21. Dispositif pour la réflexion de données selon l'une des revendications 11 à 19, **caractérisé en ce que** la copie du stock des données originales dans la mémoire terminale (5) des systèmes réflexifs d'ordinateur (4) est effectuée au moyen d'un back-up externe.
